# EUROPÄISCHE PATENTSCHRIFT

(11) **EP 3 077 644 B1**
(45) Veröffentlichungstag und Bekanntmachung des Hinweises auf die Patenterteilung: **23.05.2018**
(21) Anmeldenummer: 15700375.7
(22) Anmeldetag: 14.01.2015
(51) Int. Cl.: F02C 9/28

(54) **VERFAHREN ZUR REGELUNG EINER GASTURBINE**
METHOD FOR REGULATING A GAS TURBINE
PROCÉDÉ DE RÉGLAGE D'UNE TURBINE À GAZ

(30) Priorität: 22.01.2014 EP 14152125
(43) Veröffentlichungstag der Anmeldung: 12.10.2016
(73) Patentinhaber: Siemens Aktiengesellschaft, 80333 München (DE)
(72) Erfinder: LARSON, Marco, 45476 Mülheim (DE); SAVILIUS, Nicolas, 45359 Essen (DE)
(86) Internationale Anmeldenummer: PCT/EP2015/050524
(87) Internationale Veröffentlichungsnummer: WO 2015/110320

(56) Entgegenhaltungen:
- EP-A1- 2 249 008
- EP-A2- 2 239 641
- US-A- 5 636 507
- US-A1- 2010 300 108

## Beschreibung

Die Erfindung betrifft ein Verfahren zur Regelung einer Gasturbine, bei dem die den Brennern der Gasturbine zugeführte Brennstoffmenge anhand eines Sollwerts für die korrigierte Turbinenaustrittstemperatur geregelt wird.

Eine Gasturbine ist eine Strömungsmaschine, in der ein unter Druck stehendes Gas expandiert. Sie besteht aus einer Turbine oder Expander, einem vorgeschalteten Verdichter und einer zwischengeschalteten Brennkammer. Das Wirkungsprinzip beruht auf dem Kreisprozess (Joule-Prozess): Dieser komprimiert über die Beschaufelung einer oder mehrerer Verdichterstufen Luft, mischt diese anschließend in der Brennkammer mit einem gasförmigen oder flüssigen Treibstoff, zündet und verbrennt.

So entsteht ein Heißgas (Mischung aus Verbrennungsgas und Luft), das im nachfolgenden Turbinenteil entspannt, wobei sich thermische in mechanische Energie umwandelt und zunächst den Verdichter antreibt. Der verbleibende Anteil wird beim Wellentriebwerk zum Antrieb eines Generators, eines Propellers oder anderen rotierenden Verbrauchern verwendet. Beim Strahltriebwerk dagegen beschleunigt die thermische Energie den heißen Gasstrom, was den Schub erzeugt.

Die Regelung der Brennstoffmenge einer stationären Gasturbine im Betrieb erfolgt üblicherweise über einen Sollwert für die korrigierte Turbinenaustrittstemperatur, die aus der tatsächlichen, gemessenen Austrittstemperatur ermittelt wird. Ziel ist hierbei, dass die Turbineneintrittstemperatur als wichtige Auslegungsgröße der Gasturbine auch bei sich ändernden Umgebungsbedingungen weitgehend konstant zu halten.

Bei niedrigeren Umgebungstemperaturen und damit kühlerer Verdichterluft senkt sich jedoch die Turbineneintritts- und damit auch die Turbinenaustrittstemperatur ab. Die genannte Regelung erhöht daher die Brennstoffmenge, wodurch sich die Primärzonentemperatur/Verbrennungstemperatur in der Brennkammer erhöht. Bei niedrigen Außentemperaturen kann dies dazu führen, dass diese Temperatur so weit steigt, dass sich dies negativ auf die Verbrennungsstabilität auswirkt. Hierdurch kann es zu Störungen im Betrieb der Gasturbine kommen.

In den meisten Fällen wurde dieses Problem dadurch gelöst, dass eine Kennkurve (Cold Ambient Curve, CAC) in der Steuereinheit der Gasturbine hinterlegt wurde, die bei kalten Umgebungstemperaturen den Sollwert für die korrigierte Turbinenaustrittstemperatur begrenzt oder absenkt, so dass auch der Temperaturanstieg in der Brennkammer begrenzt wird. Da hierdurch die Turbine jedoch nicht mehr am Auslegungspunkt betrieben wird, sinken Leistung und Wirkungsgrad der Turbine ab.

Gemäß der Lehre der EP2239641A2 kann jedoch auch vorgesehen werden, einen Sollwert für die korrigierte Turbinenaustrittstemperatur mittels einer logischen Schaltung zu ermitteln, wobei zur Berechnung des maßgeblichen Schaltungskriteriums ein für die Verbrennungsstabilität charakteristischer Parameter berücksichtigt wird. Die Schaltungslogik erfordert jedoch eine fortwährende Neuberechnung möglicher unterschiedlicher Sollwerte, aus welchen anschließend lediglich einer zur Steuerung der Gasturbine heran gezogen wird. Dies ist berechnungstechnisch sehr aufwändig, da insbesondere in der Steuerung auch bei Betriebszuständen der Gasturbine, bei welchen aufgrund der Betriebsbedingungen gar keine Verbrennungsinstabilität auftreten kann, ständig die Möglichkeit einer solchen berücksichtigt wird.

Es ist daher Aufgabe der Erfindung, ein Verfahren der eingangs genannten Art anzugeben, welches einen stabilen Betrieb der Gasturbine bei gleichzeitig besonders hohem Wirkungsgrad und hoher Leistung effizient und bei Vermeidung von unnötigem steuerungstechnischen Aufwand ermöglicht.

Diese Aufgabe wird erfindungsgemäß gelöst, indem der Sollwert für die korrigierte Turbinenaustrittstemperatur anhand eines für die Verbrennungsstabilität in den Brennern charakteristischen Wertes bestimmt wird, wobei der Sollwert für die korrigierte Turbinenaustrittstemperatur zusätzlich anhand der Umgebungstemperatur bestimmt wird, und wobei der Sollwert für die korrigierte Turbinenaustrittstemperatur nur unterhalb einer vorgegebenen Umgebungstemperatur anhand des für die Verbrennungsstabilität in den Brennern charakteristischen Wertes bestimmt wird.

Die Erfindung geht dabei von der Überlegung aus, dass ein besonders hoher Wirkungsgrad und eine besonders hohe Leistung der Gasturbine dadurch erreicht werden könnten, dass die Gasturbine trotz schwankender Umgebungsbedingungen möglichst nah am Auslegungspunkt betrieben wird. Dabei muss jedoch unter allen Umständen eine stabile Verbrennung gewährleistet bleiben. Die bislang hinterlegte Kennkurve für die korrigierte Turbinenaustrittstemperatur bei niedrigen Außentemperaturen sichert zwar die stabile Verbrennung, insbesondere in bestimmten Betriebszuständen wird die korrigierte Turbinenaustrittstemperatur dabei aber weiter abgesenkt, obwohl überhaupt keine Gefahr einer instabilen Verbrennung besteht. Dies resultiert daraus, dass die korrigierte Turbinenaustrittstemperatur unabhängig von der tatsächlichen Verbrennungsstabilität reguliert wird. Um den optimalen Kompromiss zwischen Verbrennungsstabilität und Leistung sowie Wirkungsgrad zu finden, sollte daher ein charakteristischer Kennwert für die Verbrennungsstabilität gebildet werden, anhand dessen der Sollwert für die korrigierte Turbinenaustrittstemperatur bestimmt wird.

Erfindungsgemäß wird weiterhin der Sollwert für die korrigierte Turbinenaustrittstemperatur zusätzlich anhand der Umgebungstemperatur bestimmt. Mit anderen Worten: Bei der Bildung des Sollwerts für die korrigierte Turbinenaustrittstemperatur gehen sowohl die Umgebungstemperatur als auch der jeweils verwendete charakteristische Kennwert für die Verbrennungsstabilität ein.

Weiterhin wird dabei der Sollwert für die korrigierte Turbinenaustrittstemperatur nur unterhalb einer vorgegebenen Umgebungstemperatur anhand des für die Verbrennungsstabilität in den Brennern charakteristischen Wertes bestimmt. Solange die Umgebungstemperatur der Gasturbine vergleichsweise hoch ist, ist nämlich aufgrund der Auslegung der Gasturbine nicht zu befürchten, dass die Temperatur in der Brennkammer soweit ansteigt, dass die Verbrennungsstabilität gefährdet ist. Daher kann ein Grenzwert für die Umgebungstemperatur vorgegeben werden, wobei die beschriebene Regelung des Sollwerts für die korrigierte Turbinenaustrittstemperatur anhand des für die Verbrennungsstabilität in den Brennern charakteristischen Wertes erst unterhalb dieses Grenzwertes eingreift.

Damit unterscheidet sich auch die erfindungsgemäße Lösung vom Stand der Technik, welcher die Umgebungstemperatur als Grund für das Auftreten von Verbrennungsinstabilitäten gar nicht erkennt.

Vorteilhafterweise wird bei der Erfindung eine thermoakustische Größe bei der Bestimmung des für die Verbrennungsstabilität in den Brennern charakteristischen Werts verwendet. Hierbei wird ausgenutzt, dass Strömungsinstabilitäten der Brennerströmung, die sich in kohärenten Strömungsstrukturen äußern, und die die Mischungsvorgänge zwischen Luft und Brennstoff beeinflussen, thermoakustische Schwingungen erzeugen. Somit kann anhand der Messung dieser thermoakustischen Schwingungen auf die Stabilität der Verbrennung geschlossen werden.

In besonders vorteilhafter Ausgestaltung des Verfahrens werden die Beschleunigung und/oder die Wechseldruckamplitude bei der Bestimmung des für die Verbrennungsstabilität in den Brennern charakteristischen Werts verwendet. Am Brenner entstehende strömungsmechanische Instabilitätswellen führen nämlich zur Ausbildung von Strömungswirbeln, die den gesamten Verbrennungsvorgang stark beeinflussen und zu unerwünschten periodischen Wärmefreisetzungen innerhalb der Brennkammer führen, die mit starken Druckschwankungen verbunden sind. Mit den hohen Druckschwankungen sind hohe Schwingungsamplituden verknüpft, die somit als direkter Indikator für die Verbrennungsstabilität genutzt werden können. Hohe Wechseldruckamplituden und Beschleunigungen bedeuten eine hohe Instabilität der Verbrennung.

Die Regelung erfolgt weiterhin vorteilhafterweise derart, dass ein Grenzwert für den für die Verbrennungsstabilität in den Brennern charakteristischen Wert vorgegeben wird und der Sollwert für die korrigierte Turbinenaustrittstemperatur bei Unterschreiten des Grenzwerts abgesenkt wird. Hierdurch wird erreicht, dass eine vorgegebene Grenze für die Verbrennungsstabilität nie unterschritten wird.

In weiterer vorteilhafter Ausgestaltung des Verfahrens wird der Sollwert für die korrigierte Turbinenaustrittstemperatur im Teillastbetrieb anhand des für die Verbrennungsstabilität in den Brennern charakteristischen Wertes bestimmt. Die bislang verwendete feste Kennkurve für den Sollwert der korrigierten Turbinenaustrittstemperatur in Abhängigkeit von der Umgebungstemperatur gilt nämlich sowohl bei Grundlast als auch bei Teillast. Allerdings ist die absolute Verbrennungstemperatur und damit das Risiko von Verbrennungsinstabilitäten niedriger als bei Grundlast. Die Regelung anhand des für die Verbrennungsstabilität charakteristischen Werts ist daher besonders im Teillastbetrieb besonders effektiv, da hier die bisher verwendete Regelung auch dann eingriff, wenn überhaupt kein Bedarf der Reduzierung der Turbinenaustrittstemperatur hinsichtlich der Verbrennungsstabilität bestand.

Eine Steuereinheit für eine Gasturbine, ist vorteilhafterweise zum Ausführen des beschriebenen Verfahrens ausgelegt. Sie umfasst also entsprechende Eingänge für die jeweils notwendigen Sensoren, d. h. Druck- und Beschleunigungssensoren und eine entsprechende Regelungselektronik oder -software, mittels derer die Verfahrensmerkmale umgesetzt werden können.

Eine Gasturbine umfasst vorteilhafterweise eine derartige Steuereinheit.

Eine Kraftwerksanlage umfasst vorteilhafterweise eine derartige Gasturbine.

Die mit der Erfindung erzielten Vorteile bestehen insbesondere darin, dass durch die Bestimmung bzw. Modifikation des Sollwerts für die korrigierte Turbinenaustrittstemperatur direkt anhand eines für die Verbrennungsstabilität charakteristischen Grenzwerts wie z. B. thermoakustischen Größen auch bei niedrigen Umgebungstemperaturen stets eine optimale Leistung und ein optimaler Wirkungsgrad der Gasturbine auch im Teillastbetrieb erreicht werden. Leistung und Wirkungsgrad können in jedem Betriebszustand auf ihren maximal möglichen Werten gehalten werden und nur die absolut notwendigen Einbußen müssen hingenommen werden, um die Verbrennungsstabilität zu erhalten.

Ein Ausführungsbeispiel der Erfindung wird anhand einer Zeichnung näher erläutert. Darin zeigen:
- FIG 1: einen teilweisen Längsschnitt durch eine Gasturbine und
- FIG 2: eine schematische Darstellung eines Verfahrens zur Regelung der Gasturbine.

Gleiche Teile sind in allen Figuren mit denselben Bezugszeichen versehen.

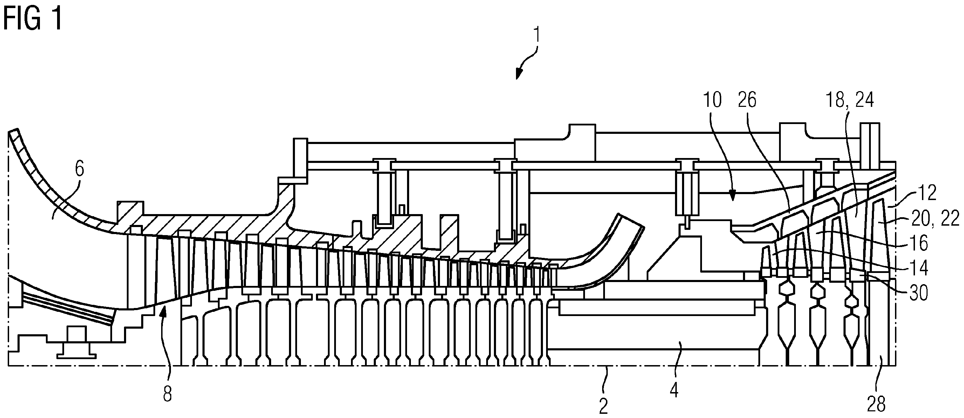

Die FIG 1 zeigt eine Gasturbine 1 in einem Längsteilschnitt. Der Teilschnitt zeigt nur die obere Hälfte der Gasturbine 1. Die Gasturbine 1 weist im Inneren einen um eine Rotationsachse 2 (Axialrichtung) drehgelagerten Rotor 4 auf, der auch als Turbinenläufer bezeichnet wird. Entlang des Rotors 4 folgen aufeinander zunächst ein Ansauggehäuse 6 und ein Verdichter 8. Aus dem Austritt des Verdichters 8 wird die Luft in zwei in FIG 1 nur im Ansatz dargestellte Silobrennkammern 10 geführt, die im Folgenden nicht näher dargestellt sind. Auf die Silobrennkammer 10 folgen eine Turbine 12 und das nicht mehr dargestellte Abgasgehäuse.

Obwohl das im Folgenden dargestellte Verfahren anhand einer Gasturbine 1 mit Silobrennkammern 10 erläutert wird, ist es genauso in Gasturbinen 1 mit anders gestalteten Brennkammern anwendbar. Die folgenden Ausführungen gelten somit auch für Gasturbinen 1 mit z. B. einer Ring-, Rohr- oder Ring/Rohr-Brennkammer.

Die Silobrennkammern 10 kommunizieren mit einem ringförmigen Heißgaskanal 14 in der Turbine 12. Dort bilden beispielsweise vier hintereinander geschaltete Turbinenstufen 16 die Turbine 12. Jede Turbinenstufe 16 ist aus zwei Schaufelringen gebildet. In Strömungsrichtung eines Arbeitsmediums gesehen folgt im Heißgaskanal 14 einer aus Leitschaufelreihe 18 eine aus Laufschaufeln 20 gebildete Laufschaufelreihe 22. Die Schaufeln Leitschaufeln 24 der Leitschaufelreihe 18 und die Laufschaufeln 20 sind leicht gekrümmt profiliert, ähnlich einer Flugzeugtragfläche.

Die Leitschaufeln 24 sind dabei am Stator 26 befestigt. Jede Leitschaufel 24 weist neben dem eigentlichen Schaufelblatt einen auch als Plattform bezeichneten Leitschaufelfuß und einen dem Leitschaufelfuß gegenüberliegenden Leitschaufelkopf auf. Der Leitschaufelkopf ist dem Rotor 4 zugewandt und an einem Innenring 30 festgelegt. Jeder Innenring 30 umschließt dabei die Welle des Rotors 4. Ebenso weist jede Laufschaufel 20 einen derartigen Laufschaufelfuß auf, endet jedoch in einer Laufschaufelspitze.

Die Laufschaufeln 18 einer Laufschaufelreihe 22 sind mittels jeweils einer Turbinenscheibe 28 am Rotor 4 angebracht. Die Laufschaufeln 20 bilden somit Bestandteile des Rotors oder Läufers 4. An den Rotor 4 angekoppelt ist ein Generator oder eine Arbeitsmaschine (nicht dargestellt).

Während des Betriebs der Gasturbine 1 wird vom Verdichter 8 durch das Ansauggehäuse 6 Luft angesaugt und verdichtet. Die am turbinenseitigen Ende des Verdichters 8 bereitgestellte verdichtete Luft wird in die Silobrennkammern 10 geführt und dort mit einem Brennmittel vermischt. Das Gemisch wird dann unter Bildung eines Heißgases in den Silobrennkammern 10 verbrannt. Von dort aus strömt das Heißgas entlang des Heißgaskanals 14 vorbei an den Leitschaufeln 24 und den Laufschaufeln 20.

Dem Fluidstrom wird durch die möglichst wirbelfreie laminare Umströmung der Turbinenschaufeln 20, 24 ein Teil seiner inneren Energie entzogen, der auf die Laufschaufeln 20 der Turbine 12 übergeht. Über diese wird dann der Rotor 4 in Drehung versetzt, wodurch zunächst der Verdichter 8 angetrieben wird. Die nutzbare Leistung wird an die nicht dargestellte Arbeitsmaschine abgegeben.

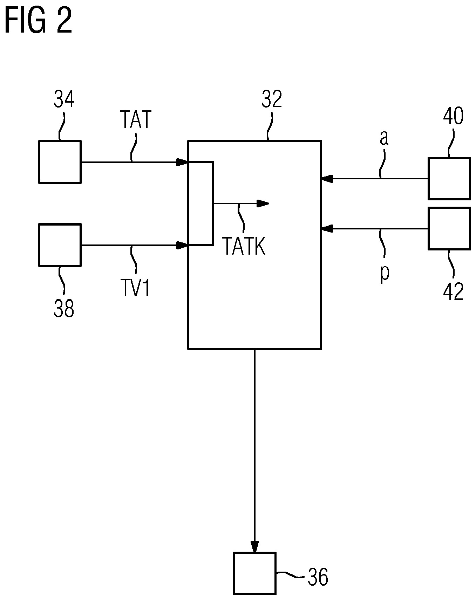

FIG 2 zeigt nunmehr schematisch die Funktion der Regelung der Gasturbine, die in einer Steuereinheit 32 erfolgt. Auslegungsziel ist dabei, die Turbineneintrittstemperatur oder ISO-Mischtemperatur TTliso konstant zu halten. Diese im Idealzustand am Eintritt der Turbine 12 herrschende Temperatur TTliso des Heißgases ist nicht direkt messbar. Sie entspricht in etwa der Brennkammeraustrittstemperatur abzüglich der Temperaturverluste durch die Beimischung von Kühl- und Leckageluft, wobei in der Theorie von einer vollständigen Durchmischung ausgegangen wird.

Zur Regelung des Betriebs der Gasturbine 1 wird daher die Turbinenaustrittstemperatur TAT des Heißgases am Austritt der Turbine 12 mittels einer Temperaturmesseinrichtung 34 überwacht. Über die Menge des eingebrachten Brennstoffes in die Silobrennkammer 10 kann sowohl die Leistung der Gasturbine 1 als auch die Turbinenaustrittstemperatur TAT und somit indirekt die Turbineneintrittstemperatur TTliso geregelt werden. Eine Erhöhung des Volumenstroms des Brennmittels in die Gasturbine 1 führt zu einer höheren Temperatur des Heißgases und zu einer Leistungssteigerung der Gasturbine 1. Dazu regelt die Steuereinrichtung 32 das Brennstoffzufuhrventil 36.

Da die Turbineneintrittstemperatur TT1 auch von der Umgebungstemperatur TV1 des angesaugten Luftstroms vor dem Verdichter 8 abhängig ist, wird diese ebenfalls stetig d. h. während der gesamten Betriebsdauer zyklisch wiederkehrend mittels der Temperaturmesseinrichtung 38 erfasst oder bestimmt.

Mittels der Steuereinrichtung 32 wird die Abhängigkeit der Turbinenaustrittstemperatur TAT von der Lufttemperatur TV1 weitgehend eliminiert, indem eine korrigierte Turbinenaustrittstemperatur TATK gemäß TATK = TAT - k · TV1 als Hilfsgröße bestimmt wird. Die korrigierte Turbinenaustrittstemperatur TATK ist demnach weitgehend vom Brennmitteleinsatz abhängig, so dass die Gasturbine 1 durch die Regelung der korrigierten Turbinenaustrittstemperatur TATK als Regelgröße und mit der Einstellung des Volumenstroms des Brennmittels als Stellgröße leichter geregelt werden kann. Die korrigierte Turbinenaustrittstemperatur TATK kann auch anhand einer quadratischen Gleichung oder anhand von anderen Funktionen ermittelt werden.

In der Steuereinheit 32 kann, je nach Umgebungstemperatur, ein Sollwert Tsoll der korrigierten Turbinenaustrittstemperatur TATK eingestellt und bestimmt werden. Eine Bestimmung soll hierbei jedoch nur unterhalb einer vorgegebenen Umgebungstemperatur anhand des für die Verbrennungsstabilität in den Brennern charakteristischen Wertes bestimmt werden. In einem solchen Fall erfolgt der Vergleich des Sollwerts Tsoll mit der bestimmten korrigierten Turbinenaustrittstemperatur TATK. Ist der Istwert, die korrigierte Turbinenaustrittstemperatur TATK kleiner - größer - als der Sollwert Tsoll, so erhöht - erniedrigt - die Steuereinheit 32 über das Brennstoffzufuhrventil 36 die Brennmittelzufuhr zur Silobrennkammer 10.

Bei sinkenden Umgebungstemperaturen TV1 sinkt die Turbineneintrittstemperatur TT1iso ab, da die Verdichterluft kühler ist und damit dem Heißgas kühlere Kühl- und Leckageluft zugeführt wird. Damit sinkt aber auch die Turbinenaustrittstemperatur TAT und - trotz der vorgenommenen Korrektur - die korrigierte Turbinenaustrittstemperatur TATK, so dass die beschriebene Regelung die Brennstoffzufuhr erhöht. Damit erhöht sich die Verbrennungstemperatur in der Silobrennkammer 10, so dass unter Umständen die Verbrennung durch Oszillationen instabil werden kann. Der Sollwert Tsoll für die korrigierte Turbinenaustrittstemperatur TATK muss also bei niedrigen Au-ßentemperaturen TV1 gesenkt werden.

Neben den oben dargestellten Zusammenhängen beinhaltet die Formel für die TATK auch noch weitere Eingangsgrößen wie z. B. die Drehzahl der Gasturbine 1 und die Luftfeuchte.

Die Gasturbine weist nun zusätzlich Drucksensoren 40 und Beschleunigungssensoren 42 in der Silobrennkammer 10 auf. Diese können auch im Rahmen des von der Anmelderin eingeführten "Advanced Stability Margin Controller (aSMC)" vorhanden sein und messen in jedem Fall die thermoakustischen Messgrößen Beschleunigung a und Wechseldruckamplitude p. Diese dienen dazu, einen charakteristischen Wert W für die Verbrennungsstabilität zu bestimmen.

Die Bestimmung des Sollwerts Tsoll der korrigierten Turbinenaustrittstemperatur TATK erfolgt nun bei niedrigen Umgebungstemperaturen TV1 (hier kann ein bestimmter Grenzwert vorgegeben sein) nun auf Basis des ermittelten charakteristischen Werts W oder direkt anhand eines Algorithmus aus den gemessenen Werten für die Beschleunigung a und die Wechseldruckamplitude p. Im Wesentlichen wird hierbei eine Reduktion des Sollwerts Tsoll vorgenommen, sobald die Verbrennungsstabilität einen bestimmten Grenzwert unterschreitet. Der Sollwert Tsoll bleibt also stets so hoch wie möglich, aber so niedrig wie nötig, um Instabilitäten der Verbrennung zu vermeiden. Es erfolgt somit eine Regelung des Sollwerts Tsoll anhand der ermittelten Verbrennungsstabilität.

Insbesondere im Teillastbetrieb und bei niedrigen Außentemperaturen werden dadurch die Leistung und der Wirkungsgrad der Gasturbine 1 optimiert.

## Patentansprüche

1. Verfahren zur Regelung einer Gasturbine (1), bei dem die den Brennern der Gasturbine (1) zugeführte Brennstoffmenge anhand eines Sollwerts (Tsoll) für die korrigierte Turbinenaustrittstemperatur (TATK) geregelt wird, wobei der Sollwert (Tsoll) für die korrigierte Turbinenaustrittstemperatur (TATK) anhand eines für die Verbrennungsstabilität in den Brennern charakteristischen Wertes (W) bestimmt wird, **dadurch gekennzeichnet, dass**
der Sollwert (Tsoll) für die korrigierte Turbinenaustrittstemperatur (TATK) zusätzlich anhand der Umgebungstemperatur (TV1) bestimmt wird, wobei der Sollwert (Tsoll) für die korrigierte Turbinenaustrittstemperatur (TATK) nur unterhalb einer vorgegebenen Umgebungstemperatur (TV1) anhand des für die Verbrennungsstabilität in den Brennern charakteristischen Wertes (W) bestimmt wird.

2. Verfahren nach Anspruch 1, bei dem eine thermoakustische Größe (a, p) bei der Bestimmung des für die Verbrennungsstabilität in den Brennern charakteristischen Werts (W) verwendet wird.

3. Verfahren nach einem der vorhergehenden Ansprüche, bei dem die Beschleunigung (a) und/oder die Wechseldruckamplitude (p) bei der Bestimmung des für die Verbrennungsstabilität in den Brennern charakteristischen Werts (W) verwendet werden.

4. Verfahren nach einem der vorhergehenden Ansprüche, bei dem ein Grenzwert für den für die Verbrennungsstabilität in den Brennern charakteristischen Wert (W) vorgegeben wird und der Sollwert (Tsoll) für die korrigierte Turbinenaustrittstemperatur (TATK) bei Unterschreiten des Grenzwerts abgesenkt wird.

5. Verfahren nach einem der vorhergehenden Ansprüche, bei dem der Sollwert (Tsoll) für die korrigierte Turbinenaustrittstemperatur (TATK) im Teillastbetrieb anhand des für die Verbrennungsstabilität in den Brennern charakteristischen Wertes (W) bestimmt wird.

6. Steuereinheit (32) für eine Gasturbine (1), ausgelegt zum Ausführen des Verfahrens nach einem der vorhergehenden Ansprüche.

7. Gasturbine (1) mit einer Steuereinheit (32) nach Anspruch 6.

8. Kraftwerksanlage mit einer Gasturbine (1) nach Anspruch 7.

## Claims

1. Method for regulating a gas turbine (1), in which the fuel quantity supplied to the burners of the gas turbine (1) is regulated using a target value (Tsoll) for the corrected turbine outlet temperature (TATK), wherein the target value (Tsoll) for the corrected turbine outlet temperature (TATK) is determined using a value (W) which is characteristic of the combustion stability in the burners, **characterized in that**
the target value (Tsoll) for the corrected turbine outlet temperature (TATK) is additionally determined using the ambient temperature (TV1), wherein the target value (Tsoll) for the corrected turbine outlet temperature (TATK) is determined only below a predefined ambient temperature (TV1) using the value (W) which is characteristic of the combustion stability in the burners.

2. Method according to Claim 1, in which a thermal-acoustic variable (a, p) is used during the determination of the value (W) which is characteristic of the combustion stability in the burners.

3. Method according to one of the preceding claims, in which the acceleration (a) and/or the alternating pressure amplitude (p) are used during the determination of the value (W) which is characteristic of the combustion stability in the burners.

4. Method according to one of the preceding claims, in which a limiting value for the value (W) which is characteristic of the combustion stability in the burners is predefined, and the target value (Tsoll) for the corrected turbine outlet temperature (TATK) is lowered when the limiting value is undershot.

5. Method according to one of the preceding claims, in which the target value (Tsoll) for the corrected turbine outlet temperature (TATK) is determined in the partial load mode using the value (W) which is characteristic of the combustion stability in the burners.

6. Control unit (32) for a gas turbine (1), configured to carry out the method according to one of the preceding claims.

7. Gas turbine (1) having a control unit (32) according to Claim 6.

8. Power plant having a gas turbine (1) according to Claim 7.

## Revendications

1. Procédé de régulation d'une turbine (1) à gaz, dans lequel on régule la quantité de combustible envoyée aux brûleurs de la turbine (1) à gaz à l'aide d'une valeur (Tsoll) de consigne de la température (TATK) corrigée à la sortie de la turbine, la valeur (Tsoll) de consigne de la température (TATK) corrigée à la sortie de la turbine étant déterminée à l'aide d'une valeur (W) caractéristique de la stabilité de la combustion dans les brûleurs,
**caractérisé en ce que**
on détermine la valeur (Tsoll) de la température (TATK) corrigée à la sortie de la turbine supplémentairement à l'aide de la température (TV1) ambiante, la valeur (Tsoll) de consigne de la température (TATK) à la sortie de la turbine étant déterminée seulement en dessous d'une température (TV1) ambiante donnée à l'avance à l'aide de la valeur (W) caractéristique de la combustion dans les brûleurs.

2. Procédé suivant la revendication 1, dans lequel on utilise une grandeur (a, p) thermoacoustique dans la détermination de la valeur (W) caractéristique de la stabilité de la combustion dans les brûleurs.

3. Procédé suivant l'une des revendications précédentes, dans lequel on utilise l'accélération (a) et/ou l'amplitude (p) de pression alternée dans la détermination de la valeur (W) caractéristique de la stabilité de la combustion dans les brûleurs.

4. Procédé suivant l'une des revendications précédentes, dans lequel on donne à l'avance une valeur limite de la valeur (W) caractéristique de la stabilité de la combustion dans les brûleurs et on abaisse, si l'on passe en dessous de la valeur limite, la valeur (Tsoll) de consigne de la température (TATK) à la sortie de la turbine.

5. Procédé suivant l'une des revendications précédentes, dans lequel on détermine la valeur (Tsoll) de consigne de la température (TATK) corrigée à la sortie de la turbine dans le fonctionnement à pleine charge à l'aide de la valeur (W) caractéristique de la stabilité de la combustion dans les brûleurs.

6. Unité (32) de commande d'une turbine (1) à gaz conçue pour effectuer le procédé suivant l'une des revendications précédentes.

7. Turbine (1) à gaz ayant une unité (32) de commande suivant la revendication 6.

8. Centrale électrique ayant une turbine (1) à gaz suivant la revendication 7.
